(19) Europäisches Patentamt
European Patent Office
Office européen des brevets

(11) EP 2 682 916 A1

(12) EUROPEAN PATENT APPLICATION

(43) Date of publication:
08.01.2014 Bulletin 2014/02

(51) Int Cl.:
*G06T 1/00* (2006.01)

(21) Application number: 12305811.7

(22) Date of filing: 06.07.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• Baudry, Severine
35576 Cesson-Sévigné (FR)
• Chupeau, Bertrand
35576 Cesson-Sévigné (FR)

(74) Representative: Huchet, Anne
Technicolor
1-5 rue Jeanne d'Arc
92130 Issy-les-Moulineaux (FR)

(54) **Method for watermark decoding**

(57)     The invention relates to a method for decoding a watermark in a target video wherein a plurality of watermark decoding keys are associated with frame indices of a master video, the method comprising the steps of determining a frame index pair i,j wherein frame index i refers to a position of a frame in the master video and frame index j refers to a position of a frame in the target video; accessing a watermark decoding key Ki from the master frame index i; decoding watermark on frame j using the watermark decoding key Ki; computing a confidence score of a watermark decoding for the determined frame pair i,j; iterating previous step on i; matching a frame index in and a frame index j for which the confidence score of watermark decoding is maximum over the at least frame index i; and determining the watermark for the frame corresponding to frame index j in the target video by accessing key $K_i$ from frame index in from the matched frame index pair $i_{n,j}$.

In a preferred embodiment, the method is recursively applied to successive potential frame pairs and confidence score is input as a posteriori information in a registering algorithm. According to another aspect, the invention also relates to a device for implementing the method.

Figure 1

EP 2 682 916 A1

**Description**

Field of the invention

The invention relates to watermark decoding. More particularly the invention relates to a method for joint watermarking decoding and temporal registration of a target video with a master video.

Back ground of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Among many alternative copyrights management systems, watermarking techniques hide binary information into multimedia content in a robust and imperceptible manner. The embedded information can be used later during forensics analysis to identify the source of an illegal copy. Temporal registration of a watermarked video copy is, most of the time (i.e . in the variant where the watermark is modified from one frame to another), a mandatory pre-processing for subsequent watermark decoding. Temporal video registration consists in temporally aligning frames of two videos, called the target video and the master video (also called original video), (or of segment of videos) of a same content. Temporal registration is all the more necessary as the video has undergone frame-rate conversion, camcording, frame-grabbing, etc. A registration method must be accurate and robust to noise. Many temporal registration algorithms are known from the skilled in the art.

In a first class of temporal registration algorithms, a reference pattern is watermarked along with the watermark payload. The watermark detector will  then try every likely temporal transform and select the one which matches the reference pattern more closely. The drawback of these methods is that watermarking a reference pattern will either increase the watermark visibility (since a second registration watermark is inserted at top of the useful forensic one) or decrease the payload capacity (the "watermarking space" is used to transmit the registration information). Besides such methods are often based on exhaustive search, where every possible temporal transforms are tested and the temporal transform with largest confidence is elected, which raise the issues of huge time-consumption and high sensitivity to noise.

In another class of registration algorithms, temporal registration is based on the registration of temporal video fingerprints. The "fingerprint" of a video content is a set of features - automatically extracted from the video signal - which are compact, discriminant and robust to signal distortions. A temporal fingerprint is a particular kind of fingerprint capturing the evolution of the signal over time. However, computing and aligning temporal fingerprints of a target and a of master video is time and power consuming for a whole content, while in many cases only a temporal segment of such video is interesting (such as in video forensics, the temporal segment with the embedded watermark). The drawback of these methods based on analysis of similarity of fingerprints is that the fingerprints of the master video must be stored in a database. Depending on the methods used to compute fingerprints, the storage size needed may be quite high.

Thus known methods raise the issue of the efficiency of such registration methods before decoding a watermark. A method for accurate and robust registration adapted to watermark decoding without fingerprint or dedicated watermarks is therefore needed.

Summary of the invention

To this end, the invention relates to a method for decoding a watermark in a target video wherein a plurality of watermark decoding keys are respectively associated with frame indices of a master video, the method comprising, for at least a frame index j referring to a position of a frame in the target video, the steps, in a device, of:

a) determining a frame index pair i,j wherein frame index i refers to a position of a frame in the master video;
b) accessing a watermark decoding key $K_i$ from the master frame index i;
c) decoding watermark on frame j in the target video using the watermark decoding key $K_i$;
d) computing a confidence score that the watermark decoding key $K_i$ corresponds to the watermark on frame j ;
e) iterating steps a) to d) for at least an index i in the master video;
f) matching a frame index in referring to a position of a frame in the master video and a frame index j referring to a position of a frame in the target video for which the confidence that the watermark decoding key $K_i$ corresponds to the watermark on frame j is maximum over the at least frame index i;
g) and determining the watermark for frame at the position corresponding to frame index j in the target video by accessing key $K_i$ from frame index in from the matched frame index pair $i_n$,j.

Advantageously the method does not require information dedicated to registration such as temporal fingerprint or dedicated watermark for evaluating the video transform. Besides the registration step of the method is natively adapted to watermark decoding (no preliminary exhaustive registration, no overhead for storing "registering" fingerprints, no noise induce by synchronization watermark).

In a preferred embodiment, the method is recursively applied to successive potential frame pairs. The method thus comprises the steps of:

a) determining successive frame index pairs i,j wherein frame index i refers to a position of a frame in said master video and frame index j refers to a position of a frame in said target video;

b) accessing a watermark decoding key $K_i$ from the master frame index i;

c) decoding watermark on frame j in target video using the watermark decoding key $K_i$;

d) computing a confidence score that the watermark decoding key $K_i$ corresponds to the watermark on frame j;

e) iterating steps a) to d) for at least a different combination of an index i in the master video and an index j in the target video ;

f) registering successive frame index pairs i,j using the confidence score that the watermark decoding key $K_i$ corresponds to the watermark on frame j resulting in a cumulated confidence score ;

g) matching a last frame index in referring to the master video and a frame index $j_k$ referring to the target video for which the cumulated confidence score is maximum over the at least frame index j and recursively matching the frame index i in the master video with the frame index j in the target video from the maximum cumulated confidence score;

h) and determining the watermark for each of the frame at a position corresponding to frame index j in the target video by accessing key $K_i$ from frame index i from the matched frame index pair i,j.

According to a particular characteristic, confidence score of watermark decoding is a correlation score between the watermark on frame at the position corresponding to frame index j and a sequence determined by accessing key $K_i$ from frame index i referring to master video. According to another particular characteristic, confidence score of watermark decoding is an estimate of the a posteriori probability of decoding a watermark for the frame at the position corresponding to frame index j by accessing key $K_i$ from frame index i referring to master video.

According to an advantageous characteristic, the registering step further uses at least a determined constraint among which the increasing order of frames in the target and master video. Advantageously the method is less complex and more robust than a method based on an exhaustive search, thanks to the a priori information introduced by the determined constraint.

According to another advantageous characteristic, the registering step uses dynamic programming or Viterbi and further comprises computing a cumulated confidence score of watermark decoding for each frame i belonging the master video.

According to another aspect, the invention also relates to a device for decoding a watermark in a target video wherein a plurality of watermark decoding keys are associated with frame indices of a master video, the device comprising a processor being adapted to perform any variant of the method previously described.

Brief description of the drawings

Other characteristics and advantages of the invention will appear through the description of a non-limiting embodiment of the invention, which will be illustrated, with the help of the enclosed drawings.

- **Figure 1** represents a preferred embodiment of a method according to the invention,
- **Figure 2** illustrates the computation of the cumulated distance between frame index i of a master video and frame index j of a target video according to an embodiment of the invention,
- **Figure 3** an exemplary decoding device according to a preferred embodiment of the invention.

In the figure, the represented blocks are purely functional entities, which do not necessarily correspond to physically separate entities. These functional entities may be implemented as hardware, software, or a combination of software and hardware; furthermore, they may be implemented in one or more integrated circuits.

Detailed description of preferred embodiments

A salient idea of the invention is to perform a joint decoding and registering algorithm. In most known methods for decoding a watermark, the decoded watermark also comes along with a confidence score. On a correctly registered sequence, the score should be (reasonably) high. On the contrary, on an incorrectly registered sequence, this score will be very low; more precisely, it will be of the same order of magnitude as if the detection was performed on an non watermarked video. Hence, the decoding confidence score will indicate whether the target video has been correctly registered. For each frame pair wherein one frame belongs to the target video and the other frame belongs to a master video, the decoding confidence score will be input as a posteriori information in a state-of-the art registration algorithm (for instance dynamic programming or Viterbi) to give the best registration estimate. In a refinement, the registration algorithm will introduce a priori constraints to yield a more robust registration estimate. Therefore the registration algorithm is intrinsically linked to the decoding algorithm. Advantageously, the registration performances fit well the watermarking algorithms since only frames bearing watermark information will be registered, saving computation time and memory. Registration will perform better on frames bearing many watermark bits, because the confidence score will be more accurate and will discriminate more precisely correctly registered frames from incorrectly registered frames.

As opposed to known registration methods, the method according to a preferred embodiment of the invention uses the watermark decoding score instead of the similarity between fingerprints to register the watermarked target video with the master video. In various embodiments of the watermark algorithm, a key defines, for each frame in the watermark video, parameters useful for the decoding. According to the watermarking algorithm, the parameters differ. The skilled in the art will appreciate that the decoding algorithm do not require knowledge of the frame in the master, but require information on the master video such as the frame index in the master video, the watermark algorithm, and the parameters associated to the determined frame index.

In a preferred embodiment, each frame i of the master video is watermarked with number of bits $n_i$. In a variant, the number of watermarked bits per frame is variable. In a particular variant, some of the frames may also not be watermarked, thus the number of watermarked bits is reduced to zero for these frames. Thus, in the preferred embodiment wherein the watermark embedder modifies a block in a frame, the key may define localization of watermarked blocks or pixels in the frame or the modified DCT coefficient. The watermark embedder uses a watermarking key $K_i$ which may be different from one frame to the other. The skilled in the art knows that in practice, such keys may be derived as successive outputs of a pseudo-random generator which is initialized by a master key. As a consequence, the watermark bits on a given frame i will be correctly decoded only if the correct key $K_i$ is applied for the decoding. For each watermark bit index k, the watermark decoder will output an estimation of the bit value noted $\hat{b}_k$ and an associated confidence score noted $S_k$. For instance, $S_k$ may be given by an estimate of the a posteriori probability

$$S_{k=} P(b_k = \widehat{b_k}/F_i).$$

In this case, $S_k$ will range from 0.5 for binary coding when each bit 0 or 1 is equally likely, to 1 when best confidence score is reached. A global confidence score $S_i(j)$ is computed for k watermarked bits of frame i in the master video decoded on frame j in the target video.

In a variant embodiment of watermarking, the watermark is embedded through a spreading sequence to get a better resistance to communication distortion. Thus, in the variant embodiment wherein the watermark embedder introduces a determined noise in the video, the key defines the seed used for the generation of a pseudo-random sequence of noise. In this variant, at the decoding stage, the confidence score $S_i(j)$ will be given by the correlation score.

Thus, in any variant of watermarking scheme and associated watermark detector, when the watermark detector is applied on the wrong frame, the output confidence scores will be very low, as if the detector were applied on a non-watermarked frame. In the variant where $S_i(j)$ is a posteriori probability, $S_i(j) \sim 0.5$. In the variant where $S_i(j)$ is a correlation score, $S_i(j) \sim 0$.

The detection score hence gives us information on whether a given frame in the target video is correctly registered with respect to the master video.

In a first embodiment, the confidence score is used independently on each frame pair. In a first step, potential frame pairs (i,j) are determined wherein a frame index i refers to the position of a frame in the master video and frame index j refers to the position of a frame in the target video. For determining such frame index pairs, a first raw anchor is used and a range around the anchor is determined. Such first raw anchor may be visually performed by a user, for instance frames corresponding to shot boundaries determine an anchor. In another embodiment, the anchor is automatically determined through frame analysis for instance by extracting key frames in both target and master video. The first raw anchor may also be determined by the first frame of the video. The skilled in the art will appreciate that contrary to an exhaustive search, not all frame pair indices are determined as potential match frame pair indices. Only a set of indices comprised in a range around the anchor is selected as potential frame index for matching. A tradeoff is made between the width of the range and the precision of the anchor wherein a reduced range improves the efficiency of the algorithm in term of power computation but requires a more precise anchor. In a second step, watermark decoding is applied to potential frame pair (i,j) and a confidence score $S_i(j)$ is computed for the k watermark bits inserted on the determined frame i of the master video and potentially decoded in the frame j of the target video. The first and second step are repeated, sequentially or in parallel, for a plurality of frame pairs and a collection of frame indices and associated confidence scores are determined. In a third step, according to the confidence score $S_i(j)$, a frame index j is matched with a frame index i. In a variant, the match is performed for the frame pair for which the confidence score of watermark decoding for the frame pair i,j is maximum. In the variant where $S_i(j)$ is a posteriori probability, $S_i(j) \sim 1$. In the variant where $S_i(j)$ is a correlation score, $S_i(j) \sim 1$. In another variant, the match is performed when the confidence score of watermark decoding for the frame pair i,j is above a first threshold. In a last step, watermark decoding is performed on the matched frame index pairs using the frame at the position j in the target video and the parameters deduced from the decoding key $K_i$.

However, if the target video has undergone noise, for instance if it has been compressed, edited, or transformed, registration performed independently on each watermarked frame on the confidence score basis may yield incorrect decoding. In a preferred embodiment, the registration is rendered more robust by considering a set of successive watermarked frames, and by searching for a global registration pattern which, firstly, gives a high overall confidence score, and secondly, corresponds to a likely temporal transformation of the video. In a variant, a pre-determined constraint on the temporal transform is input in the registration algorithm. Advantageously, the determined constraint consists in that the frame indexes for the registered frames follow an increasing order.

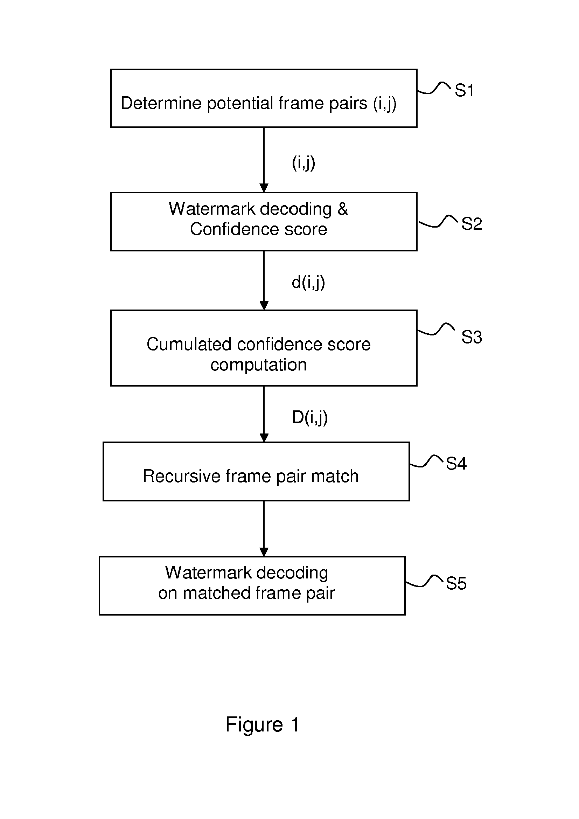

Figure 1 represents a preferred embodiment of the invention. In a first step S1, potential match frame index pairs (i,j) are determined wherein i denotes the frame index in the master video, and j denotes the frame index in the target video.

In a second step S2, watermark decoding is applied to the determined potential match frame index pairs (i,j) using potential decoding keys, and a confidence score $S_i(j)$ is computed for the watermark bits inserted on the determined frame i of the master video and potentially decoded in the frame j of the target video.

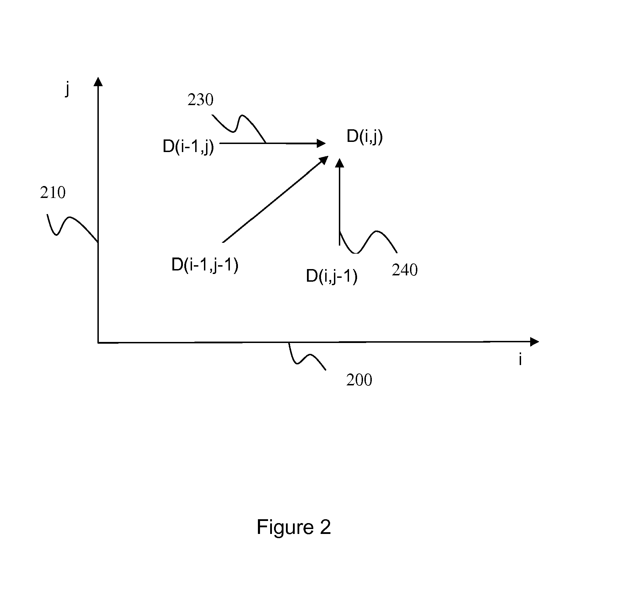

In a third step S3, the confidence scores $S_i(j)$ are input in a temporal registration algorithm. State-of-the-art algorithms like dynamic programming ( also known as dynamic time warping), Viterbi, or forward-backward, enable temporal registration by combining information coming from the data (a posteriori info) with predefined constraints on the acceptable temporal transform (a priori info). For instance, dynamic programming recursively computes a score, or distance, for each potential match pair (i, j). The algorithm aims at finding the match pairs with minimal distance (i.e. maximal score) by considering successive frame distances. Figure 2 illustrates the computation of the cumulated distance between frame index i of the master video 200 and frame index j of a target video 210. In a variant, for each increasing index in frames of master and target video, the cumulated distance D(i,j) is computed as :

$$D(i,j) = d(i,j) + MIN\{D(i-1,j-1); D(i-1,j) + p_d; (D(i,j-1) + p_c\}$$

With

- d(i,j) being the dissimilarity between master frame i and target frame j;
- $p_d$ 230 the penalty for image deletion; and
- $p_c$ 240 the penalty for image duplication.

The penalties respectively depend on the probability in the temporal distortion model that a frame was deleted or inserted. D(i,j) is then recursively computed for all frame indices i in the master video.

In a fourth step S4, the best match for each master frame index ranging from n-1 to 0 is recursively determined starting from the best match for the last frame index $i_n$. The best match for the last frame index $i_n$ is computed with:

$$j(n) = \underset{j}{ARG\,min}(D(i_n, j))$$

Then recursively, the best match for each master frame index ranging from n-1 to 0 is determined by finding the antecessor match pair for each best match pair.

In known pre-processing registering algorithms, the a posteriori information d(i,j) is computed for instance as a distance between fingerprints of master frame i and target frame j. Then the watermark decoding algorithm is performed on the registered video. On the contrary, the confidence score obtained after decoding the watermark bits on target frame j with watermark key of master frame i is used as a posteriori information of a registration algorithm. As the confidence score should be higher if the match between frames i and j is correct, the distance between frames i and j is determined as being:

$$d(i,j) = -S_i(j)$$

In a variant, any other known registration algorithms, like Viterbi or forward-backward are compatible with the invention and the watermark score $S_i(j)$ is input to such algorithm as a posteriori information.

In a last step S5, watermark decoding is performed on the matched frame index pairs using the frame at the position j in the target video and the parameters deduced from the decoding key $K_i$.

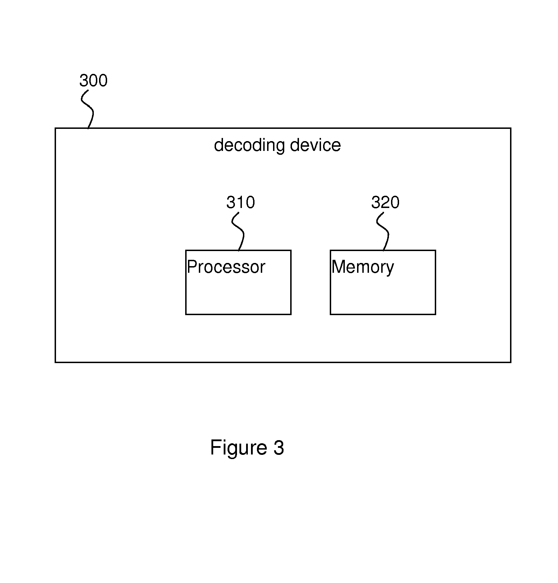

Figure 3 illustrates an exemplary decoding device according to a preferred embodiment of the present invention. The decoding device 300 comprises at least one processor 310 (hereinafter "processor") and memory 320. The processor 310 is adapted to perform any embodiment of the invention and the memory 210 is adapted to store data such as cumulated confidence score. Advantageously, the memory do not need to store in a database huge amount of data such as the fingerprints from known registering methods. It should be understood that the decoding device 300 may further comprise internal connections, a communication interface for receiving target video to decode and a user interface.

The skilled person will also appreciate that as the decoding method can be implemented quite easily without the need for special equipment, it may be implemented by 'normal' user devices such as PCs, mobile phones, gateways in home networks and so on.

Naturally, the invention is not limited to the embodiments previously described. In particular, the invention is neither limited to the watermarking algorithm nor the watermark decoding algorithm. The invention is compatible with any registration algorithm using a posteriori information for the purpose of registration.

**Claims**

1. Method for decoding a watermark in a target video wherein a plurality of watermark decoding keys are respectively associated with frame indices of a master video, **characterized in that**, the method comprises, for at least a frame index j referring to a position of a frame in said target video, the steps, in a device (300) of:

   a) determining (S1) a frame index pair i,j wherein frame index i refers to a position of a frame in said master video;
   b) accessing a watermark decoding key $K_i$ from the master frame index i;
   c) decoding watermark on frame j in said target video using said watermark decoding key $K_i$;
   d) computing (S2) a confidence score that the watermark decoding key $K_i$ corresponds to the watermark on frame j ;
   e) iterating steps a) to d) for at least an index i in the master video;
   f) matching a frame index in referring to a position of a frame in said master video and a frame index j referring to a position of a frame in said target video for which the confidence that the watermark decoding key $K_i$ corresponds to the watermark on frame j is maximum over the at least frame index i;
   g) and determining (S5) the watermark for frame at the position corresponding to frame index j in said target video by accessing key $K_i$ from frame index in from the matched frame index pair $i_n$,j.

2. Method according to claim 1 **characterized in that** the method further comprises

   a) determining (S1) successive frame index pairs i,j wherein frame index i refers to a position of a frame in said master video and frame index j refers to a position of a frame in said target video;
   b) accessing a watermark decoding key $K_i$ from the master frame index i;
   c) decoding watermark on frame j in target video using said watermark decoding key $K_i$;
   d) computing (S2) a confidence score that the watermark decoding key $K_i$ corresponds to the watermark on frame j;
   e) iterating steps a) to d) for at least a different combination of an index i in the master video and an index j in the target video ;
   f) registering successive frame index pairs i,j using the confidence score that the watermark decoding key $K_i$ corresponds to the watermark on frame j resulting in a cumulated confidence score ;
   g) matching (S4) a last frame index in referring to said master video and a frame index $j_k$ referring to said target video for which the cumulated confidence score is maximum over the at least frame index j and recursively matching said frame index i in said master video with said frame index j in said target video from said maximum cumulated confidence score;
   h) and determining the watermark for each of said frame at a position corresponding to frame index j in said target video by accessing key $K_i$ from frame index i from the matched frame index pair i,j.

3. Method according to claim 1 or 2 wherein confidence score of watermark decoding is a correlation score between the watermark on frame at the position corresponding to frame index j and a sequence determined by accessing key $K_i$ from frame index i referring to master video.

4. Method according to claim 1 or 2 wherein confidence score of watermark decoding is an estimate of the a posteriori probability of decoding a watermark for said frame at the position corresponding to frame index j by accessing key $K_i$ from frame index i referring to master video.

5. Method according to claim 2 wherein registering step further uses at least a determined constraint among which the increasing order of frames in the target and master video.

6. Method according to claim 2 wherein registering step uses dynamic programming or Viterbi and further comprises computing a cumulated  confidence score of watermark decoding for each frame i belonging said master video.

7. Device (300) for decoding a watermark in a target video wherein a plurality of watermark decoding keys are respectively associated with frame indices of a master video, said device comprising a processor (310) being adapted to perform method claim 1 to 6.

```
┌─────────────────────────────────────┐
│  Determine potential frame pairs (i,j)│  ⌇ S1
└─────────────────────────────────────┘
                  │
                (i,j)
                  ▼
┌─────────────────────────────────────┐
│      Watermark decoding &            │  ⌇ S2
│      Confidence score                │
└─────────────────────────────────────┘
                  │
                d(i,j)
                  ▼
┌─────────────────────────────────────┐
│    Cumulated confidence score        │  ⌇ S3
│         computation                  │
└─────────────────────────────────────┘
                  │
                D(i,j)
                  ▼
┌─────────────────────────────────────┐
│     Recursive frame pair match       │  ⌇ S4
└─────────────────────────────────────┘
                  │
                  ▼
┌─────────────────────────────────────┐
│       Watermark decoding             │  ⌇ S5
│     on matched frame pair            │
└─────────────────────────────────────┘
```

Figure 1

Figure 2

300

decoding device

310                               320

| Processor | | Memory |

Figure 3

Europäisches
Patentamt

European
Patent Office

Office européen
des brevets

## EUROPEAN SEARCH REPORT

Application Number

EP 12 30 5811

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DELP E J ET AL: "Temporal Synchronization in Video Watermarking", IEEE TRANSACTIONS ON SIGNAL PROCESSING, IEEE SERVICE CENTER, NEW YORK, NY, US, vol. 52, no. 10, 1 October 2004 (2004-10-01), pages 3007-3022, XP011119394, ISSN: 1053-587X, DOI: 10.1109/TSP.2004.833866 | 1-5,7 | INV. G06T1/00 |
| Y | * abstract * <br> * page 3011 - page 3013 * <br> * page 3014 - page 3015 * <br> ----- | 6 | |
| X | US 2006/280246 A1 (ALATTAR ADNAN M [US] ET AL ALATTAR ADNAN M [US]) 14 December 2006 (2006-12-14) | 1-5,7 | |
| Y | * abstract * <br> * paragraph [0009] - paragraph [0010] * <br> * paragraph [0015] * <br> * paragraph [0046] - paragraph [0051] * <br> * paragraph [0061] * <br> ----- | 6 | |
| X | DELANNAY D ET AL: "Generalized 2-D cyclic patterns for secret watermark generation", IMAGE PROCESSING, 2000. PROCEEDINGS. 2000 INTERNATIONAL CONFERENCE ON SEPTEMBER 10-13, 2000, IEEE, PISCATAWAY, NJ, USA, 10 September 2000 (2000-09-10), pages 77-79vol.2, XP031534396, ISBN: 978-0-7803-6297-0 | 1-5,7 | TECHNICAL FIELDS SEARCHED (IPC) <br><br> G06T |
| Y | * abstract * <br> * page 78 * <br> * page 79 * <br> * figures 3,4 * <br> ----- <br><br> -/-- | 6 | |

The present search report has been drawn up for all claims

| Place of search | Date of completion of the search | Examiner |
|---|---|---|
| Munich | 13 September 2012 | Luca, Mihai Bogdan |

EPO FORM 1503 03.82 (P04C01)

Europäisches
Patentamt

European
Patent Office

Office européen
des brevets

# EUROPEAN SEARCH REPORT

Application Number

EP 12 30 5811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN E T ET AL: "Temporal synchronization in video watermarking: further studies", PROCEEDINGS OF SPIE, SPIE, US, vol. 5020, 21 January 2003 (2003-01-21), pages 493-504, XP009088624, ISSN: 0277-786X, DOI: 10.1117/12.477310 | 1-5,7 | |
| Y | * abstract * <br> * page 494 - page 496 * <br> * page 499 - page 501 * <br> * figures 3,4 * | 6 | |
| X | US 6 785 401 B2 (WALKER BRIAN R [US] ET AL) 31 August 2004 (2004-08-31) | 1-5,7 | |
| Y | * abstract * <br> * column 5, line 20 - column 7, line 1 * <br> * column 7, line 54 - column 8, line 67 * <br> * figures 6-7 * | 6 | |
| X | MOBASSERI B G: "Direct sequence watermarking of digital video using m-frames", IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 2, 4 October 1998 (1998-10-04), pages 399-403, XP010308533, DOI: 10.1109/ICIP.1998.723399 ISBN: 978-0-8186-8821-8 | 1-5,7 | TECHNICAL FIELDS SEARCHED (IPC) |
| Y | * abstract * <br> * page 401 * | 6 | |
| Y | WO 2007/045680 A1 (THOMSON LICENSING [FR]; CHUPEAU BERTRAND [FR]; OISEL LIONEL [FR]; JOUE) 26 April 2007 (2007-04-26) * abstract * * page 7, line 6 - line 25 * | 6 | |

The present search report has been drawn up for all claims

| Place of search | Date of completion of the search | Examiner |
|---|---|---|
| Munich | 13 September 2012 | Luca, Mihai Bogdan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 12 30 5811

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2012

| Patent document cited in search report | | Publication date | Patent family member(s) | | Publication date |
|---|---|---|---|---|---|
| US 2006280246 | A1 | 14-12-2006 | AU 2003210625 A1<br>US 2003185417 A1<br>US 2006280246 A1<br>WO 03062960 A2 | | 02-09-2003<br>02-10-2003<br>14-12-2006<br>31-07-2003 |
| US 6785401 | B2 | 31-08-2004 | NONE | | |
| WO 2007045680 | A1 | 26-04-2007 | NONE | | |

For more details about this annex : see Official Journal of the European Patent Office, No. 12/82